# EUROPÄISCHE PATENTSCHRIFT

(11) **EP 1 060 488 B1**
(45) Veröffentlichungstag und Bekanntmachung des Hinweises auf die Patenterteilung: **25.09.2002**
(21) Anmeldenummer: 99910121.5
(22) Anmeldetag: 10.02.1999
(51) Int. Cl.: H01G 4/015, H01G 4/008

(54) **METALLISIERUNG FÜR SELBSTHEILENDEN FOLIENKONDENSATOR**
METAL-PLATING FOR SELF-HEALING FOIL CAPACITORS
REVETEMENT METALLIQUE POUR CONDENSATEUR BOBINE AUTOREGENERABLE

(30) Priorität: 17.02.1998 DE 19806586
(43) Veröffentlichungstag der Anmeldung: 20.12.2000
(73) Patentinhaber: EPCOS AG, 81541 München (DE)
(72) Erfinder: VETTER, Harald, D-89520 Heidenheim (DE)
(74) Vertreter: Epping, Wilhelm, Dipl.-Ing.
(86) Internationale Anmeldenummer: DE9900363
(87) Internationale Veröffentlichungsnummer: WO99043011

(56) Entgegenhaltungen:
- EP-A- 0 088 137
- EP-A- 0 640 996
- DE-A- 19 639 877
- FR-A- 2 605 140

## Beschreibung

Die vorliegende Erfindung bezieht sich auf eine Metallisierung für einen selbstheilenden Folienkondensator, bei dem eine mit einem metallischen Belag versehene dielektrische Kondensatorfolie in Laufrichtung der Folie zu einem Kondensatorwickel aufgewickelt ist, wobei der Belag mit einer Segmentierung versehen ist.

Die Einsatzmöglichkeiten von Leistungskondensatoren werden in erster Linie durch die jeweiligen zulässigen Grenzwerte für die Betriebsfeldstärke, die Stoßstrombelastbarkeit und den Wärmewiderstand festgelegt. Leistungskondensatoren können also nur in dem Rahmen verwendet werden, in welchem diese Grenzwerte für die Betriebsfeldstärke, die Stoßstrombelastbarkeit bzw. den Wärmewiderstand nicht überschritten werden.

Bei den selbstheilenden Leistungskondensatoren wird der Grenzwert für die Betriebsfeldstärke im wesentlichen durch die Regeneriersicherheit des betrachteten dielektrischen Aufbaues bzw. des Kondensatorwickels bestimmt. Die Regeneriersicherheit ihrerseits hängt wiederum unter anderem von der Metallisierung, dem Wärmewiderstand und der thermischen Belastbarkeit des Kondensatorwickels ab, der im wesentlichen aus einer mit einem metallischen Belag versehenen dielektrischen Folie gebildet ist.

Bei einem selbstheilenden Folienkondensator entsteht der größte Teil des Verlustes in den metallischen Belägen. Um diese Verluste möglichst klein zu machen, können an sich die Beläge dicker gestaltet werden, was deren Flächenwiderstände vermindert. Einem solchen Vorgehen sind aber aus Gründen der Regeneriersicherheit des Kondensatorwickels enge Grenzen gesetzt: bekanntlich muß nämlich zumindest ein Belag dünn gehalten werden, damit diese Regeneriersicherheit gewährleistet ist.

Die Verwendung von querprofilierten oder keilförmig gestalteten Belägen anstelle von homogenen Belägen hat zwar Verbesserungen hinsichtlich einer Verminderung der Verluste gebracht. Es hat sich gezeigt, daß bei derart strukturierten Belägen das Regenerierverhalten in der Mitte der Wickelbreite des Kondensatorwickels am ungünstigsten ist, so daß in diesem Bereich der minimal zulässige Flächenwiderstand festgelegt wird.

Für Wechselspannungskondensatoren wurde auch schon daran gedacht, Beläge einzusetzen, die quer zur Folienlaufrichtung mit unterschiedlichen Legierungsanteilen ausgebildet sind. Ein solches Vorgehen ist besonders für Folienkondensatoren mit vergleichsweise großer Bauform bzw. Wickelbreite zweckmäßig.

Gleichspannungskondensatoren werden gewöhnlich mit strukturierten Belägen ausgeführt. Hierfür gibt es grundsätzlich zwei unterschiedliche Ausführungsformen, nämlich das sogenannte Karo-Segment und das sogenannte T-Segment. Für diese Segmente sind seit Jahrzehnten Bemühungen im Gange, eine optimale Gestaltung entsprechender Strukturen zu entwickeln (vgl. beispielsweise DE-PS 723 291).

Andere Strukturierungen anstelle einer T-Segmentierung und einer Karo-Segmentierung bestehen beispielsweise in einer Sechseckflächen-Strukturierung usw.

Eine "optimale Struktur" sollte an sich "selbstdimensionierende" Eigenschaften aufweisen. Alle derzeit bekannten Strukturen mit "selbstdimensionierenden" Eigenschaften liefern aber bis heute keine voll befriedigenden Ergebnisse.

Solche befriedigenden Ergebnisse können dagegen bei sonst gleichen Randbedingungen im Hinblick auf die Dimensionierung für die Größe der durch die Segmentierungen gebildeten Teilkapazitäten und die Größe von Sicherungen im Zusammenhang mit dem maximal zulässigen Energieumsatz des selbstheilenden Durchschlages und für einen minimal zulässigen Strukturabstand der Segmentierungen, der sich an dem Wechselspannungsanteil einer betrachteten Anwendung orientiert, erzielt werden.

Es hat sich gezeigt, daß bei so festgelegten Daten die Idealform einer durch die Segmentierung geschaffenen Teilkapazität in einer Kreisform besteht, in deren Zentrum ein gedachter Durchschlagkanal gelegen ist. Als erste Näherung kann anstelle der Kreisform ein Quadrat oder - bei gröberer Näherung - ein Rechteck mit einem bestimmten Seitenverhältnis L/B in Betracht gezogen werden.

Nun werden Leistungskondensatoren in vergleichsweise großen Dimensionen aufgebaut, was wiederum in der Regel auch große Wickelbreiten des Kondensatorwickels voraussetzt. Diese große Wickelbreite läßt aber für die an sich vorteilhafte T-Segmentierung in vielen Fällen nur ein relativ ungünstiges Seitenverhältnis L/B zu.

In letzter Zeit werden selbstheilende Folienkondensatoren oft zusammen mit IGBT-Halbleiterelementen eingesetzt (IGBT = Bipolartransistor mit isoliertem Gate). Diese IGBT-Halbleiterelemente stellen hohe Anforderungen an einen Folienkondensator hinsichtlich Impuls- und Strombelastbarkeit. Dies bedeutet, daß ein solcher Folienkondensator, der zusammen mit einem IGBT-Halbleiterelement eingesetzt wird, einen besonders hohen Energieumsatz je Folienlauflänge aushalten muß, der deutlich über dem entsprechenden Energieumsatz für Folienkondensatoren liegt, die zusammen mit GTO-Halbleiterelementen verwendet sind (GTO = Gate-Abschaltverhalten).

Schließlich haben Versuche gezeigt, daß für die Einsatzmöglichkeiten von Leistungskondensatoren nicht nur die Stoßstrombelastbarkeit im Zusammenhang mit Betriebsfeldstärke und Wärmewiderstand, sondern auch die Ladespannung als weitere wesentliche Einflußgröße berücksichtigt werden muß. Eine in diesem Hinblick vorgenommene kräftiger ausgeführte Randverstärkung führt aber nicht zu dem gewünschten Erfolg, wobei zu berücksichtigen ist, daß ein solches Vorgehen mit erhöhten Randverstärkungen rasch an wirtschaftliche Grenzen stößt.

Es ist daher Aufgabe der vorliegenden Erfindung, eine Metallisierung für einen Folienkondensator der eingangs genannten Art zu schaffen, die ein Belagprofil aufweist, das sich im Vergleich zu bestehenden Metallisierungen mit einem verbesserten Regenerierverhalten auszeichnet, das weiterhin eine erhöhte Stoßstrombelastbarkeit erlaubt und das zudem minimale Belagverluste liefert, so daß insgesamt eine höhere Ausnutzung des dielektrischen Materials bei verringertem Aufwand erreicht wird.

Diese Aufgabe wird bei einer Metallisierung nach dem Oberbegriff des Patentanspruches 1 erfindungsgemäß dadurch gelöst, daß der Belag in Querrichtung zur Laufrichtung und quer zur Richtung der Dicke des Belags aus einer profilierten Legierungsmetallisierung besteht, bei der deren Hauptbestandteile in Abhängigkeit von der Querrichtung verändert sind.

Bei der erfindungsgemäßen Metallisierung wird also eine quer zur Laufrichtung der Kondensatorfolie profilierte Legierungsmetallisierung eingesetzt, die beispielsweise eine in Abhängigkeit von der senkrecht zur Laufrichtung gelegenen Querrichtung unterschiedlich zusammengesetzte Legierung aufweist, wobei in einem Bereich mit maximalem Flächenwiderstand eine strukturierte Metallisierung mit Segmentierung des Belages angeordnet ist, während in dem danebenliegenden Bereich mit minimalen Flächenwiderstand keine Strukturierung vorgesehen ist. Für die Strukturierung der Metallisierung kann beispielsweise eine T-Segmentierung vorgesehen werden, bei der besonders gute Seitenverhältnisse L/B zu erreichen sind. Sicherungen werden im Bereich einer Sicherheitsüberdeckung zwischen den beiden Bereichen, also dem Bereich für die strukturierte Metallisierung und dem Bereich mit der profilierten Legierungsmetallisierung, vorgesehen.

Mit der erfindungsgemäßen Metallisierung, die zusätzlich zu der üblichen T-Segmentierung noch eine querprofilierte Legierungsmetallisierung verwendet, kann eine bis um 40 % im Vergleich zu bestehenden Metallisierungsprofilen verringerte Verlustleistung erreicht werden. In bevorzugter Weise werden die Hauptlegierungsbestandteile, nämlich Aluminium und Zink, längs der Querrichtung verändert. Diesen Hauptlegierungsbestandteilen kann aber auch beispielsweise noch Silber beigefügt werden. (Silber kann dabei auch als Sperrschicht wirken.)

Das optimale Schichtdickenverhältnis Stufe/Fläche wird bei der erfindungsgemäßen Metallisierung primär durch die thermische Belastung im Bereich der Sicherheitsüberdeckung zwischen den beiden oben genannten Bereichen bestimmt. Wird das Ziel einer minimalen Wärmeerzeugung im Kondensatorwickel angestrebt, so ist jedoch zu berücksichtigen, daß im Bereich mit dem minimalen Flächenwiderstand, der Kondensatorwickel nicht selbstheilend ist. Es liegt also insoweit ein "semiselbstheilender" Wickelaufbau vor.

Wie bereits oben erläutert wurde, wird bei der erfindungsgemäßen Metallisierung im Bereich des maximalen Flächenwiderstandes eine strukturierte Metallisierung für die Segmentierung des Belages angewandt. Eine bevorzugte Segmentierung ist dabei eine T-Segmentierung. Diese liefert hier nämlich den besonderen Vorteil, daß bei voller Ausnutzung der Selbstheilung eine um einen Faktor 2 günstigere Situation hinsichtlich der Seitenverhältnisse L/B geschaffen wird, als dies beim Stand der Technik mit T-Segmentierung möglich ist, der die querprofilierte Legierungsmetallisierung eben nicht vorsieht. In diesem Fall müssen beide Folien strukturiert sein.

Bei einer T-Segmentierung sind jedenfalls vorzugsweise im Bereich der Sicherheitsüberdeckung Sicherungen vorgesehen. Es ist aber auch möglich, die Sicherungen im Bereich der Kontaktzone anzuordnen und auf den oben angegebenen Vorteil mit dem Faktor 2 zu verzichten.

Es hat sich gezeigt, daß die Stoßstrombelastbarkeit einer Metallisierung mit einer querprofilierten Legierungsmetallisierung deutlich größer ist als bei Metallisierungen nach dem Stand der Technik.

Zu beachten ist auch noch, daß die Sicherungen bei einer Segmentierung nur einen anteiligen Stoßstrom zu verarbeiten brauchen.

Anstelle oder zusätzlich zu einer Strukturierung kann gegebenenfalls auch eine vollkommene Querabtrennung der Metallisierung im Abstand von beispielsweise 10 bis 300 mm auf der Folie vorgenommen werden.

Bei dem Kondensatorwickel kann gegebenenfalls zwischen den einzelnen Folien mit dem jeweiligen Belag noch ein Materialauftrag vorgenommen werden, der in genau dosierter Menge durch Auftragen, Aufsprühen oder Aufdampfen angebracht wird, um so den Wickeldruck im Kondensatorwickel zu optimieren und die Regeneriersicherheit zusätzlich vorteilhaft zu beeinflussen.

Nachfolgend wird die Erfindung anhand der Zeichnungen näher erläutert. Es zeigen:
- Fig. 1: eine Draufsicht auf eine Kondensatorfolie in deren Laufrichtung y und
- Fig. 2: einen Schnitt AB durch die Kondensatorfolie von Fig. 1 in einer Querrichtung x senkrecht zur Laufrichtung y.

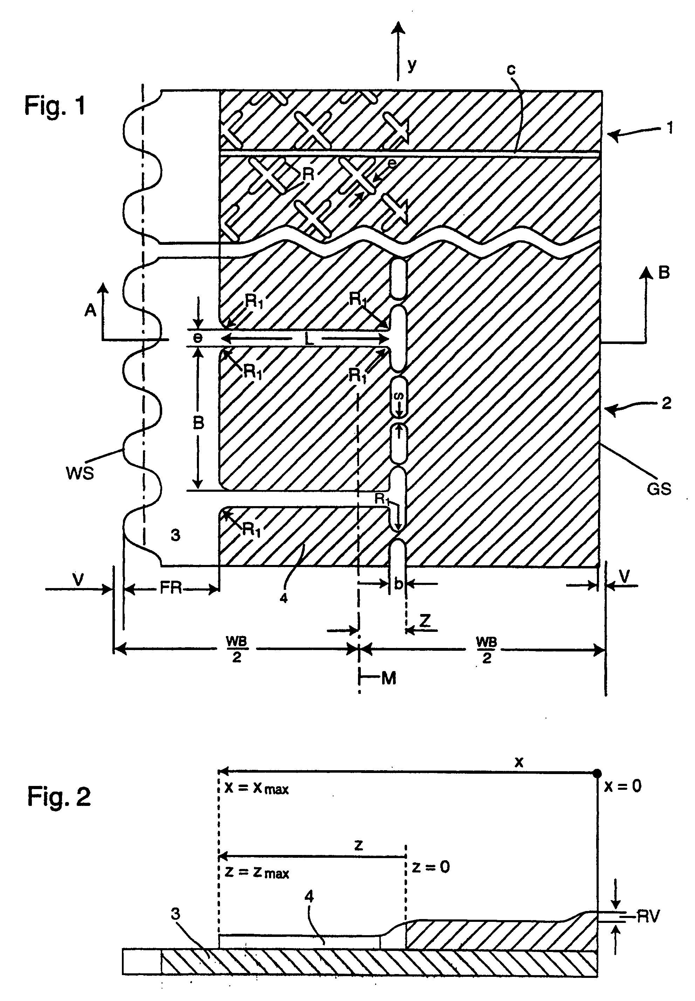

In der Fig. 1 ist in einem oberen Teil 1 die sogenannte Karo-Segmentierung gezeigt, während in einem unteren Teil 2 hiervon die bevorzugte T-Segmentierung veranschaulicht ist. Außerdem ist im Teil 1 eine Querabtrennung c gezeigt.

Auf einer dielektrischen Folie 3 aus beispielsweise PET (Polyester), PP (Polypropylen) oder weiteren Polymeren ist hierzu ein segmentierter Belag 4 aus einer Legierung aus Aluminium und Zink aufgetragen, wobei diese Legierung noch Anteile von Silber oder Magnesium oder ähnlichen Metallen enthalten kann. Das Silber oder Magnesium kann dabei auch als Sperrschicht wirken. Der Belag 4 bildet so eine Metallisierungsprofilierung und hat in der Querrichtung x (bis x = xₘₐₓ (vgl. Fig. 2)) eine sich ändernde Zusammensetzung seiner Hauptbestandteile, also Aluminium und Zink.

Von Bedeutung ist, daß in einem in Laufrichtung y linken Teil der Folie 3 (ab z = 0; vgl. Fig. 2) der Belag 4 wesentlich dünner gestaltet ist als in einem rechten Teil dieser Folie 3. Dadurch ist der Flächenwiderstand in dem linken Teil des Belages 4 zwischen z = 0 und z = zₘₐₓ erheblich größer als in dem rechten Teil.

Die Folie 3 selbst hat an ihrem linken Rand einen Wellenschnitt WS und an ihrem rechten Rand einen Glattschnitt GS, wie dies bereits vorgeschlagen worden ist. Weiterhin besteht am linken Rand ein Freirand FR, in welchem kein Belag 4 auf die Folie 3 aufgetragen ist.

Im linken Teil der Folie sind, wie bereits erläutert wurde, in dem Teil 1 beispielsweise die Karo-Segmentierung des Belages 4 vorgesehen, wobei diese Segmentierung mit einer Breite e einen Radius R für eine durch Stege der Metallisierung gebildete Sicherung hat. Es sind aber auch andere Strukturen, wie beispielsweise Sechsecke, möglich.

Weiterhin zeigt die linke Hälfte des Belages 4 im Teil 2 eine T-Segmentierung, an deren Ende, etwa in der Mitte des Belages 4, Sicherungen mit einem Anschlußradius R₁ und einer Stegbreite S angebracht sind.

Die T-Segmentierung besteht im wesentlichen aus Schlitzen mit der Länge L und der Breite θ, in dem Belag 4. Die Länge L und die Breite B der Teilkapazitäten, die durch die Schlitze abgetrennt sind, sind im wesentlichen gleich zueinander.

Die Sicherungen selbst liegen in einem Bereich Z neben der Mittellinie M des Kondensatorwickels mit der Wickelbreite WB. Gegenüber dieser Wickelbreite WB zeigt die Folie 3 einen Versatz V.

Der Anschlußradius der einzelnen Teilkapazitäten ist ebenfalls mit R₁ veranschaulicht. Eine Überdeckung Ü ist gegeben durch die Wickelbreite, vermindert um die doppelte Summe aus Versatz V und Freirand FR.

Im linken Teil des Belages 4 (zwischen z = 0 und z = zₘₐₓ) mit großem Flächenwiderstand liegt in der Legierung ein kleiner Al-Anteil von etwa unter 5 % vor, während im rechten Teil des Belages 4 mit kleinem Flächenwiderstand ein großer Aluminium-Anteil in der Legierung angestrebt wird, der etwa über 5 % liegt. Dabei kann im linken Teil des Belages 4, also in dessen hochohmigem Bereich, der Verlauf des Flächenwiderstandes R einer Funktion R ≈ 1/z² folgen.

Der Belag 4 kann gegebenenfalls noch mit einer Randverstärkung RV versehen werden, die aber auch entfallen kann.

Die erfindungsgemäße Metallisierung aus dem Belag 4 weist also eine quer zur Laufrichtung y der Kondensatorfolie 3 profilierte Legierungsmetallisierung auf, die in Abhängigkeit zur Querrichtung x eine unterschiedlich zusammengesetzte Legierung hat und in einem in der Fig. 1 linken Teil bevorzugt mit einer Segmentierung versehen ist, während in einem mittleren Teil im Bereich der Sicherheitsüberdeckung 2Z Sicherungen angeordnet sind. Die Metallisierungsprofilierung kann auch durch Veränderung der wesentlichen Bestandteile der Legierung, also Aluminium und Zink, in Abhängigkeit von der Querrichtung x bewirkt werden. Die Sicherungen können auch im rechten Teil der Fig. 1 angeordnet werden, wenn die Segmentierung über die ganze Folie ausgedehnt wird.

## Patentansprüche

1. Kondensatorfolie für selbstheilende Folienkondensatoren, mit einer in eine Laufrichtung (y) aufwickelbaren Folie (3), auf die ein strukturierter, metallischer Belag (4) aus einer Legierung aufgebracht ist,
**dadurch gekennzeichnet, daß**
sich die Zusammensetzung der Legierung in einer Querrichtung (x) zur Laufrichtung und quer zur Richtung der Dicke des Belags (3) ändert.

2. Kondensatorfolie nach Anspruch 1,
**dadurch gekennzeichnet,**
**daß** Sicherungen im Gebiet (2Z) zwischen einem ersten Bereich mit maximalem Flächenwiderstand und einem zweiten Bereich mit minimalem Flächenwiderstand vorgesehen sind.

3. Kondensatorfolie nach Anspruch 1 oder 2,
**dadurch gekennzeichnet,**
**daß** die Segmentierung eine T-Segmentierung oder eine Karo-Segmentierung oder eine Sechseck-Segmentierung ist.

4. Kondensatorfolie nach einem der Ansprüche 1 bis 3,
**dadurch gekennzeichnet,**
**daß** der Belag (4) mit einer totalen Querabtrennung (c) versehen ist.

5. Kondensatorfolie nach Anspruch 2,
**dadurch gekennzeichnet,**
**daß** die Segmentierung im ersten Bereich vorgesehen ist.

6. Kondensatorfolie nach Anspruch 2,
**dadurch gekennzeichnet,**
**daß** Sicherungen auch im zweiten Bereich vorgesehen sind.

7. Kondensatorfolie nach einem der Ansprüche 1 bis 6,
**dadurch gekennzeichnet,**
**daß** die Hauptbestandteile der Legierung Aluminium und·Zink sind.

8. Kondensatorfolie nach Anspruch 7,
**dadurch gekennzeichnet,**
**daß** der Legierung Silber oder Magnesium beigefügt ist.

9. Kondensatorfolie nach Anspruch 2,
**dadurch gekennzeichnet,**
**daß** der Flächenwiderstand R₀ im ersten Bereich einer Funktion R₀ ≈ 1/z² folgt, wobei z die Querrichtung (x) ab dem Beginn des ersten Bereiches angibt.

## Claims

1. Capacitor foil for self-healing foil capacitors, with a film (3) which can be wound up in a running direction (y) and to which a structured, metallic coating (4) of an alloy is applied, **characterized in that** the composition of the alloy varies in a transverse direction (x) in relation to the running direction and transversely in relation to the direction of the thickness of the coating (3).

2. Capacitor foil according to Claim 1, **characterized in that** fuses are arranged in the area (2Z) between a first region with maximum surface resistance and a second region with minimal surface resistance.

3. Capacitor foil according to Claim 1 or 2, **characterized in that** the segmentation is a T segmentation or a diamond segmentation or a hexagon segmentation.

4. Capacitor foil according to one of Claims 1 to 3, **characterized in that** the coating (4) is provided with a total transverse detachment (c).

5. Capacitor foil according to Claim 2, **characterized in that** the segmentation is provided in the first region.

6. Capacitor foil according to Claim 2, **characterized in that** fuses are also provided in the second region.

7. Capacitor foil according to one of Claims 1 to 6, **characterized in that** the main constituents of the alloy are aluminium and zinc.

8. Capacitor foil according to Claim 7, **characterized in that** silver or magnesium is added to the alloy.

9. Capacitor foil according to Claim 2, **characterized in that** the surface resistance R₀ in the first region follows a function R₀ ≈ 1/z², z indicating the transverse direction (x) from the beginning of the first region.

## Revendications

1. Feuille pour des condensateurs bobinés autorégénérables comprenant une feuille (3) pouvant être enroulée dans une direction (y) d'enroulement et sur laquelle est déposé un revêtement (4) métallique structuré en un alliage,
**caractérisée en ce que** la composition de l'alliage se modifie dans une direction (x) transversale à la direction d'enroulement et transversalement à la direction de l'épaisseur du revêtement (3).

2. Feuille de condensateur suivant la revendication 1, **caractérisée en ce qu'**il est prévu des fusibles compris dans la zone (2Z) comprise entre une première partie ayant une résistance maximum de surface et une deuxième partie ayant une résistance minimum de surface.

3. Feuille de condensateur suivant la revendication 1 ou 2, **caractérisée en ce que** la segmentation est une segmentation en T ou une segmentation en carreaux ou une segmentation en hexagones.

4. Feuille de condensateur suivant l'une des revendications 1 à 3, **caractérisée en ce que** le revêtement (4) est muni d'une séparation (c) transversale totale.

5. Feuille de condensateur suivant la revendication 2, **caractérisée en ce que** la segmentation est prévue dans la première partie.

6. Feuille de condensateur suivant la revendication 2, **caractérisée en ce qu'**il est prévu des fusibles dans la deuxième partie aussi.

7. Feuille de condensateur suivant l'une des revendications 1 à 6, **caractérisée en ce que** les constituants principaux de l'alliage sont l'aluminium et le zinc.

8. Feuille de condensateur suivant la revendication 7, **caractérisée en ce que** de l'argent ou du magnésium est ajouté à l'alliage.

9. Feuille de condensateur suivant la revendication 2, **caractérisée en ce que** la résistance Rᵤ de surface dans la première partie suit une fonction Rᵤ ≈ 1/z², z indiquant la direction (x) transversale à partir du début de la première partie.
